# EUROPEAN PATENT APPLICATION

(11) **EP 2 581 922 A1**
(43) Date of publication of application: **17.04.2013**
(21) Application number: 10852913.2
(22) Date of filing: 25.06.2010
(51) Int. Cl.: H01G 4/33, H01G 4/005, H01G 4/12

(54) **ELECTRICAL ENERGY STORAGE DEVICE**

(30) Priority: 10.06.2010 JP 2010133453
(71) Applicant: Shimizu, Kanji, Kobe-shi, Hyogo 651-2114 (JP); Japan Silicon Electronics Technology Inc., Tokyo 105-0001 (JP); Enzo Planning Co., Ltd., Tokyo 150-0011 (JP); Takanashi, Kazuhiko, Tokyo 166-0003 (JP)
(72) Inventor: SHIMIZU, Kanji, Hyogo 651-2114 (JP)
(74) Representative: Grünecker, Kinkeldey, Stockmair & Schwanhäusser
(86) International application number: PCT/JP2010/060914
(87) International publication number: WO 2011/155078

(57) **Abstract**

The invention provides a compact,electrical energy storage device which has large capacity and can produce a high electrical energy. In accordance with the electrical energy storage device of the invention, the electrical energy storage device 1 comprising a first electrode 4, a dielectric layer 6 and a second electrode 7 is characterized in that between the first electrode 4 and the dielectric layer 6 and between the second electrode7 and the dielectric layer 6 there is formed an electron collector layer6 comprising electron collector microparticles 5a made up of metal, semiconductor or surface-modified ceramics.

## Description

### TECHICAL FIELD

The present invention relates to a compact, electrical energy storage device which has large capacity and can produce high electrical energy.

### BACKGROUND ART

As electrical energy storage devices utilizing a capacitor with large capacity, electrolytic capacitors and stacked ceramic capacitors are generally used. In recent years, with the increasing demand for batteries of large capacity typically in electric vehicles, the increased capacity of lithium-ion batteries has been promoted as well as electric double-layer batteries having the function of electrolytic capacitor expanded have actively been developed. In addition a research for increasing the capacity of thin-film type of stacked ceramic capacitors has started.

However, so-called capacitors, such as a stacked ceramic capacitor, involves a problem with electric current leakage, which deteriorates the overall performance. Further, so-called batteries, such as a lithium-lion battery, for storing electrical energy by means of chemical change, involves a problem of memory effect caused when partially being charged and discharged and resulting in deteriorating the performance.

In view of solving the problems, for example an electrical energy storage device using a giant magneto-resistance effect is proposed in Patent Documents 1, 2 and 3.

The giant magneto-resistance effect (GMR) means a kind of quantum-mechanical effect observed in a structure formed alternately of a thin magnetic section and a thin nonmagnetic section. When an external magnetic field is applied, the giant magneto-resistance effect causes the electric resistance to largely change from the state of high-value resistance with a zero magnetic field to the state of low-value resistance with a high magnetic field. Therefore, the giant magneto-resistance effect can be utilized as an insulator having good performance, so that a device having the giant magneto-resistance effect can store electrical energy.
Patent Document 1: Japanese Patent Laid-Open Publication No. 2008-177535;
Patent Document 2: Japanese Patent Laid-Open Publication No. 2008-177536; and
Patent Document 3: Japanese Patent Laid-Open Publication No. 2009-049351.

### SUMMARY OF THE INVENTION

### PROBLEM(S) TO BE SOLVED BY THE INVENTION

Since the electrical energy storage devices disclosed in Patent Documents 1, 2 and 3 have the magnetic sections formed of a thin film, the increased capacity could be attained by expanding the magnetic sections bi-demensionally, in which case there would be a difficulty in downsizing the devices.

Further, the electric double-layer battery includes carbon as a material used, and it is thus difficult to produce high voltage or high current, thus being difficulty in obtaining a high electrical energy.

It is therefore an object of the present invention to provide a compact, electrical energy storage device which has large capacity and can produce high electrical energy.

### MEASURES TO SOLVE THE PROBLEM(S)

In order to solve the problems described above, claim 1 recites an electrical energy storage device comprising a first electrode formed of electro-conductive material, a second electrode formed of electro-conductive material and positioned to be faced with the first electrode, and a dielectric layer formed to be interposed between the first electrode and the second electrode, wherein, between the first electrode and the dielectric layer and between the second electrode and the dielectric layer, there is formed an electron collector layer constituted of electron collectors (hereinafter referred to as "electron collectors") made up of microparticles or the like comprising metal, semiconductor material or an electro-conductively surface-modified ceramics.

In accordance with claim 2, in the device of claim 1, the microparticles of the electron collector layer are formed of magnetic material. In accordance with claim 3, in the device of claim 2, the microparticles of the electron collector layer are magnetized.

In accordance with claim 4, in an electrical energy storage device comprising a first plurality of electrodes formed of electro-conductive material, a second plurality of electrodes formed of electro-conductive material and positioned to be faced with said first plurality of electrodes, and a plurality of dielectric layers formed to be interposed between said first electrodes and said second electrodes, the dielectric layers interposed between the first electrodes and the second electrodes are stacked sequentially, there are provided wiring for connecting the first plurality of electrodes to each other and wiring for connecting the second plurality of electrodes to each other, and, between the first electrodes and the dielectric layers and between the second electrodes and the dielectric layers, there are formed the electron collector layers.

In accordance with claim 5, in an electrical energy storage device comprising a first plurality of electrodes formed of electro-conductive material, a second plurality of electrodes formed of electro-conductive material and positioned to be faced with the first plurality of electrodes, and a plurality of dielectric layers formed to be interposed between the first electrodes and the second electrodes, the dielectric layers interposed between the first electrodes and the second electrodes are stacked sequentially, there are provided an inter-layer electrode for bonding stacked electrodes for connecting the first plurality of first electrodes to each other, and an inter-layer electrode for bonding stacked electrodes for connecting the second plurality of electrodes to each other, and, between the first electrodes and the dielectric layers and between the second electrodes and the dielectric layers, there are formed electron collector layers made up of metal, semiconductor or surface-modified ceramics.

### ADVANTAGES OF THE INVENTION

As has been described above, in accordance with the invention of claim. 1, since the electron collector layer is formed between the first electrode and the dielectric layer and between the second electrode and the dielectric layer the first and second electrodes can have the surface areas thereof increased and thus the capacity of storing electrical energy increased. Further, as the microparticles are made of non-carbon material such as metal, high voltage or high current can be produced to thereby obtain a high electrical energy. Still further, those electrodes and dielectric layer formed into thin films and the use of the electron collector including microparticles having the diameter thereof nearly in the order of nanometer allow the device to be downsized.

In accordance with the invention of claim 2, as the microparticles of the electron collector layer are made up of magnetic material, voltage applied between the first and second electrodes causes the electric field to enhance the electron collection rate dependent upon the magnetic characteristic of the microparticles, whereby much more electrical energy can be stored. In accordance with the invention of claim 3, as the microparticles of the electron collector layer are magnetized beforehand, there is no need of following magnetization and hence a circuit or a device therefor.

In accordance with the invention of claim 4, since there are provided the first plurality of electrodes, the second plurality of electrodes, the first plurality of electrodes the wiring for connecting the first plurality of electrodes to each other and wiring for connecting the second plurality of electrodes to each other, the dielectric layers interposed between the first electrodes and the second electrodes being stacked sequentially and connected in parallel by wires, storage electrical energy can be increased more than the single-layered structure. Further, as the microparticles are made up of metal, semiconductor or surface-modified ceramics, high voltage or hight current can be produced to thereby obtain a high electrical energy. Still further, those electrodes and dielectric layer formed into thin films and the use of the electron collector including microparticles having the diameter thereof nearly in the order of nanometer allow the device to be downsized.

In accordance with the invention of claim 5, as the plurality of dielectric layers interposed between the first electrodes (electron collector layers) and the second electrodes (electron collector layers) are stacked and connected in parallel by the first and second inter-layer electrodes for bonding stacked electrodes, respectively, storable electrical energy can be increased more than the single-layered structure.

### BRIEF DESCRIPTION OF THE DRAWING (S)

FIG. 1 is a cross-sectional view schematically showing an electrical energy storage device in accordance of a first embodiment of the present invention;
FIG. 2 is an enlarged view schematically showing an electrode and a microparticle layer of the electrical energy storage device shown in FIG> 1;
FIG. 3 is a cross-sectional view schematically showing an electrical energy storage device in accordance with a second embodiment of the present invention; and
FIG. 4 is a cross-sectional view schematically showing and electrical energy storage device in accordance with a third embodiment of the present invention.

### LIST OF REFERENCE NUMERALS

1. Electrical energy storage device;
4. first electrode;
5. Electron collector layer (electron collector layer made of metal, semiconductor, or surface-modified ceramics);
5a. Microparticles in electron collector layer;
6. Dielectric layer;
7. Second electrode;
10. First inter-layer electrode for bonding stacked electrodes (electrodes connecting a first plurality of electrodes to each other);
11. Second inter-layered electrode for bonding stacked electrodes (electrode connecting a second plurality of electrodes to each other) ; and
12. Dielectric layer embedded by masking so as to have the first and second electrodes alternately interconnected by the inter-layered electrodes for bonding stacked electrodes.

### BEST MODE FOR IMPLEMENTING THE INVENTION

Preferred embodiments of the present invention will be described with reference to the drawings.

### EMBODIMENT 1

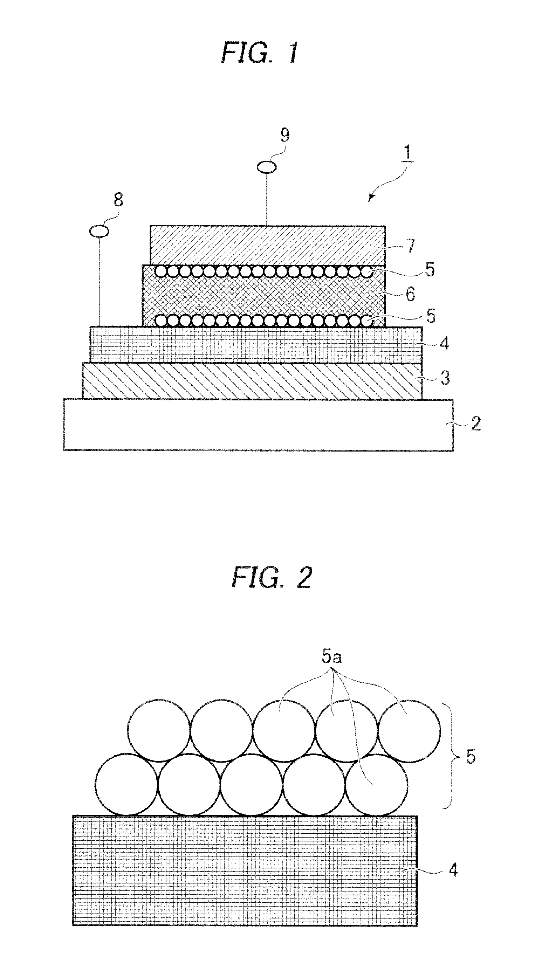

Embodiment 1 of the present invention will be described with reference to FIGS. 1 and 2. An electrical energy storage device 1 shown in FIG. 1 comprises a supporting substrate 2, a buffer layer 3, a first electron collector layers 5, a dielectric layer 6, a second electrode 7 and terminals 8, 9.

The supporting substrate 2 can, although not particularly limitative, be formed for example of monocrystalline silicon, monocrystalline SiGe, monocrystalline GaAs, monocrystalline InP, monocrystalline SrTiO3, monocrystalline MgO, monocrystalline LaAlO3, monocrystalline ZrO2, monocrystalline MgAl2O4, monocrystalline NdGaO3, monocrystalline NdAIO3, monocrystalline LaGaO₃, or glass board material. Among them, monocrystalline silicon is most preferable due to its low cost. The thickness of the supporting substrate is not particularly limitative as far as the overall mechanical strength of an electric energy storage device can be secured, and may be set to for example about 10 to 1000µm.

The buffer layer 3 is formed as an upper layer to the supporting substrate 2, and plays the role of a barrier layer for preventing reaction between the supporting substrate 2 and an electrode film constituting the first electrode 4. Material forming the buffer layer 3 can be for example of ZrO2, ReO2, ReO2-ZrO2 (Re is yttrium (Y) or a rare-earth element), MgAlO4, γ-Al2O3, SrTiO3, LaAlO3 and so on. Specifically among them, material may preferably be selected which is superior in lattice matching with the supporting substrate 2 and has its thermal expansion coefficient falling between that of the supporting substrate 2 and the thin film material forming the buffer layer 3. Further, the buffer layer 3 may be of monolayer or multilayer structure. The thickness of the buffer layer 3 is not particularly limitative as far as the layer can function as a barrier layer for preventing reaction between the supporting substrate 2 and the electrode thin film constituting the first electrode 4, and may be set to for example about 1 to 1000 nm.

It is to be noted that the buffer layer 3 may not be provided. When the buffer layer 3 is not provided, the first electrode 4 is formed on the surface of the supporting substrate 2.

The first electrode 4 is formed as an upper layer to the buffer layer 3 in the form of thin film, and can be formed for example of electro-conductive metal, such as platinum (Pt), ruthenium (Ru), rhodium (Rh), palladium (Pd), iridium (Ir), gold (Au), silver (Ag), copper (Cu), and nickel (Ni). Specifically among them, material may preferably selected which is superior in lattice matching with the supporting substrate 2 or the buffer layer 3 to form the first electrode. Further, the thickness of electrode film of the first electrode 4 is not particularly limitative as far as it can function as one electrode of the thin-film capacitor, and may be set to for example about 500-2000 nm.

The election collector layers 5 are constituted of microparticles made of metal, semiconductor material or electro-conductively surface-modified ceramics. With the electron collector layers 5 of the instant embodiment, a stack layer of microparticles 5a of the electron collector (see FIG. 2) is formed on the surface of (as an upper layer to) the first electrode 4 by spattering while controlling the diameter of the microparticles. The microparticle diameter is set to about 200-200nm, and about five to twenty layers are stacked into a multiple stack of approximately 1µm-2µm thick (FIG. 2 shows an example of two layers). The material of the microparticles 5a may be selected from magnetic substance, such as soft-magnetic material, e.g. iron-cobalt alloy, or material having very high magnetic resistance at room temperature due to the colossal effect (Super Giant Magneto-resistance Effect), e.g. manganese oxide. Alternatively, the material of the microparticle 5a may be the same as the first electrode 4, i.e. non-magnetic, electro-conductive metal may be used. When the microparticles 5a are the same in substance as the first electrode 4, the the electrode may have its surface area broadened by 100-1000 times. When magnetic material is used, the capacity of storing electrical energy can further be increased by 50-100 times due to the electric collection effect of the magnetic field.

The dielectric layer 6 is formed as an upper layer on the electron collector layer 5 stacked on the first electrode 4. As material for the dielectric layer 6, used is a substance having a high dielectric constant, for example barium titanate. The dielectric layer 6 can be formed by a variety of thin-film forming methods, such as vacuum deposition, spattering, pulse laser deposition (PLD), metal-organic chemical vapor deposition (MOCVD), metal-organic decomposition method (MOD), liquid phase method (CSD), e.g. sol-gel method. Particular, at a low temperature, plasma CVD, photo CVD, laser CVD, photo CSD, or laser CSD may preferably be used. It is noted that, as shown in FIG. 1, those layers are stacked sequentially in the form of thin films (the electron collector layers 5 being formed as microparticles), and therefore the dielectric layer 6 is of a dielectric substance that may be solidified.

On the surface of (as an upper layer to) the dielectric layer 6, the electron collector layer 5 is formed, like the first electrode 4, by spattering or the like while controlling the diameter of the microparticles. The microparticule system are formed into a multiple stack of approximately 1µm-2µm thick.

The second electrode 7 is formed into a thin film as an uppper layer to the electron collector layer 5 formed as the upper layer to the dielectric layer 6. The second electrode 7 is not particularly restrictive as far as it is electrically conductive. It can be formed of material similar to that of the first electrode 4 although not requiring the consideration of lattice matching but can be formed at room temperature. It can thus be formed of base metal as iron (Fe), nickel (Ni), and/or alloy such as WSi, MoSi. Further, the thickness of an electrode film of the second electrode 7 is not particularly limitative as far as the film functions as the opposite electrode of the thin-film capacitor, and it may be set for example to the order of 1000-10000nm.

The terminal 8, which extends from the first electrode 4, is one terminal to be connected to an input/output circuit or the like, not shown. In order to form the terminal 8, the first electrode 4 emerges outside and is partially exposed by masking. The terminal 9, which extends from the second electrode 7, is the other terminal to be connected to the input/output circuit or the like, not shown.

Through the fabrication as described above, the electron collector layers 5 are formed between the first electrode 4 and the dielectric layer 6 and between the second electrode 7 and the dielectric layer 6, respectively.

The aforementioned electrical energy storage device 1, when connected by the terminals 8 and 9 to a power supply device or the like, not shown, is electrically charged, or stores electrical energy therein. Under the circumstance, if the microparticles 5a of the electron collector layers 5 are constituted of magnetic material, the leakage of current can be prevented by the (super-) giant magneto-resistance effect, whereby much more electrical charge can be stored in the dielectric layer 6. Then, when switching the terminals 8 and dielectric layer 6. Then, when switching the terminals 8 and 9 form the power supply device or the like to a load, not shown, the stored electrical charge can be discharged to supply electrical energy to the load for operation. Accordingly, the electrical energy storage device 1 acts as a thin-film capacitor.

In accordance with the present embodiment, since the electron collector layers 6 constituted of the electron collector microparticles 5a are formed between the first electrode 4 and the dielectric layer 6 and between the second electrode 7 and the dielectric layer 6, respectively, the surface areas of the first and second electrodes 4 and 7 can be increased, and thus the capacity of storing electrical energy can be increased. Further, as the microparticules 5a are formed of non-carbon-based material, high voltage or high current can be taken out therefrom to obtain a high electrical energy.

Still further, since the particles 5a of the electron collector layers 5 are formed of magnetic material, an application of voltage across the first and second electrodes 4 and 7 causes the electric field to enhance the electrical collection rate dependent upon the magnetic characteristic of the microparticles 5a, whereby much more electrical energy can be stored.

In addition, when the microparticles 5a of the aforementioned electron collector layers 5 are formed of magnetic material, they may be magnetized beforehand to form the microparticle layers or they may be incorporated into the electrical energy forming device 1, which may in turn be magnetized by an external magnetic field applied prior to operation. When it is magnetized in advance, there is no need of following magnetization and hence circuits or devices therefor.

### EMBODIMENT 2

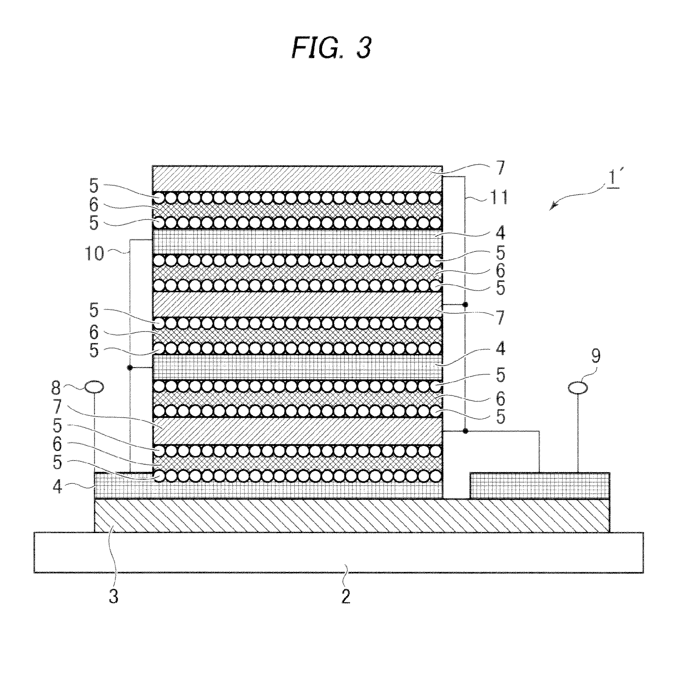

Embodiment 2 of the present invention will be described with reference to FIGS. 2 and 3. The same parts as Embodiment 1 described above will be denoted with the same reference numerals and description thereof will be repeated.

In Embodiment 2, as shown in FIG. 3, odd-numbered sets of layers are formed which comprise either the first or second electrode 4 or 7, the electron collector layer 5 and the dielectric layer 6 and the electron collector layer 5 formed on the latter are alternately stacked in the order such that as the upper layers to the supporting substrate 2 and buffer layer 3 there are the first electrode 4, electron collector layer 5, electric layer 6, electron collector layer 5, second electrode 7, electron collector layer 5, dielectric layer 6, electron collector layer 5, first electrode 4 and so on. When stacking, in order to bond alternate ones of the respective electrodes to form a pair of contacts, they are partially exposed by masking so as to enable alternate bonding every other layer. In the instant embodiment, the number of stacked layers (the number of stacked layers to be formed of the thin-film capacitor, i.e. the number of dielectric layers 6) is set for example to the order of 5-100.

The first and second electrodes 4 and 7 are banded to each other alternately with the bonding wires of a first and a second inter-layer electrode for bonding stacked electrodes 10 and 11, whereby the odd-numbered electrodes, as counted from the lowest electrode, functioning as the first electrodes 4 are separated from the even-numbered electrodes functioning as the second electrodes 7. In other words, the aforementioned bonding wires form wiring for connecting the first plurality of electrodes to each other and wiring for connecting the second plurality of electrodes to each other. Then, the terminals 8 sand 9 extend from the first and second electrodes 4 and 7, respectively, to be connected to an input/output circuit or the like, not Shown.

In this way, the electrical energy storage device 1' can be formed, which comprises the first plurality of electrodes 4, the second plurality of electrodes 7 and the plurality of dielectric layers 6, and has the dielectric layers 6 interposed between the first electrodes 4 (electron collector layers 5) and the second electrodes 7 (electron collector layers 5) and stacked in order.

In accordance with the instant embodiment, the plurality of dielectric layers 6 interposed between the first electrodes 4 (electron collector layers 5) and the second electrodes 7 (electron collector layers 5) are stacked, and the first and second electrodes are connected respectively to each other with the bonding wires of the first and second inter-layer electrodes for bonding stacked electrodes 10 and 11, whereby the capacity of storing electrical energy can be increased more than the single-layered structure.

### EMBODIMENT 3

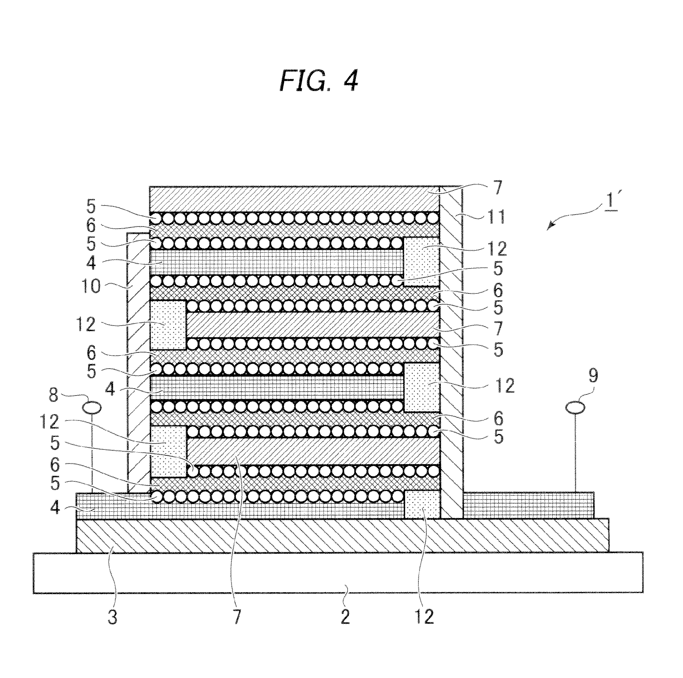

Embodiment 3 of the present invention will be described with reference to FIG. 4. The same parts as aforementioned Embodiment 2 will be denoted with the same reference numerals and the description thereof will be repeated

In Embodiment 3, as shown in FIG.4, odd-numbered sets of layers are formed which comprise either the first or second electrode 4 or 7, the electron collector layer 5 and the dielectric layer 6 and further the electron collector layer 5 formed on the latter are alternately stacked in the order such that as the upper layers of the supporting substrate 2 and buffer layer 3 there are the first electrode 4, electron collector layer 5, dielectric layer 6, electron collector layer 5, second electrode 7, electron collector layer 5, dielectric layer 6, electron collector layers 5, first electrode 4 and so on. When stacking, in order to bond alternate ones of the respective electrodes to the inter-layer electrodes for bonding stacked electrodes to form a pair of contacts, they are partially exposed by masking so as to enable alternate bonding every other layer and depositing insulating dielectric layers 12. In the present embodiment, the number of stack layers (the number of stacked layers to be formed of the thin-film capacitor, i.e. the number of dielectric layers 6) is set for example to the order of 5-100.

The first and second electrodes 4 and 7 are connected with the electrodes 10 and 11 alternately to each other, whereby the odd-numbered electrodes, as counted from the lowest electrode, functioning as the first electrodes 4 are separated from the even-numbered electrodes functioning as the second electrodes 7. In other words, the first and second inter-layer electrodes for bonding stacked electrodes 10 and 11 respectively constitude an electrode for connecting the first plurality of electrodes to each other and an electrode for connecting the second plurality of electrodes to each other. Then, the terminals 8 and 9 extend from the first and second electrodes 4 and 7, respectively, to be connected to an input/output circuit or the like, not shown.

In this way, the electrical energy storage device 1' can be formed, which comprises the first plurality of electrodes 4, the second plurality of electrodes 7 and the plurality of dielectric layers 6, and has the dielectric layers 6 interposed between the first electrodes 4 (the electron collector layers 5) and the second electrodes 7 (the electron collector layers 5) stacked in order.

In accordance with the present embodiment, the plurality of dielectric layers 6 interposed between the first electrodes 4 (electron collector layers 5) and the second electrodes 7 (electron collector layers 5) are stacked, and the first and second electrodes are connected respectively to each other with the first and second inter-layer electrodes for bonging stacked electrodes 10 and 11, whereby the capacity of storing electrical energy can be increased more than the single-layered structure.

It is to be noted that, in the aforementioned three embodiments, the respective layers stacked are a rectangular and flat shape whereas any other shape can be freely selected by the way of masking or thin-film forming.

The foregoing embodiments merely represent typical examples of the present invention;and the present invention is not to be limited to the Consititutions of the embodiments, which can be variously modified within the scope without departing from the gist of the present invention.

## Claims

1. An electrical energy storage device comprising a first electrode formed of electrode-conductive material, a second to be faced with said first electrode and a dielectric layer formed to be interposed between said first electrode and said second electrode,wherein
between said first electrode and said dielectric layer and between said second electrode and said dielectric layer, there is formed an electron collector layer made up or metallic microparticle sor the like.

2. The electrical energy storage device in accordance with claim 1, wherein the metallic microparticles of said electron collector layer are formed of magnetic material.

3. the electrical energy storage device in accordance with claim 2, wherein the microparticles of said metallic microparticle layer are magnetized.

4. An electrical energy storage device comprising a first plurality of electrodes formed of electro-conductive material, a second plurality of electrodes formed of electro-conductive material and positioned to be faced with said first plurality of electrodes, and a plurality of dielectric layers formed to be interposed between said first electrodes and said second electrodes, wherein
said it dielectric layers interposed between said first electrodes and said second electrodes are stacked sequentially,
there are provided wiring for connecting said first plurality of electrodes to each other and wiring for connecting said second plurality of elect to each other, and
between said first electrodes and said dielectric layers and between said second electrodes and said dielectric layers,are formed electron collector layers made up of metal,semiconductor or surface-modified ceramics.

5. An electrical energy storage device comprising a first plurality electrodes formed of eletro-conductive material, a second plurality of electrodes formed of electro-conductive material and to be faced with said first plurality of electrodes, and a plurality of dielectric layers formed to be interposed between said first electrodes and said second electrodes, wherein
said dielectric layers interposed between said first electrodes and said second electrodes are stacked sequentially
there are provided and inter-layer electrode for bonding stacked electrodes for connecting said first plurality of first electrodes to each other, and an inter-layer electrode for bonding stacked electrodes for connecting said second plurality of electrodes to each other, and
between said first electrodes and said dielectric layers and between said second electrodes and said dielectric layers, there are formed electron collector layers made up of metal, semiconductor or surface-modified ceramics.
